(19) Europäisches Patentamt / European Patent Office / Office européen des brevets

(11) EP 4 582 462 A1

(12) **EUROPEAN PATENT APPLICATION**
published in accordance with Art. 153(4) EPC

(43) Date of publication:
**09.07.2025 Bulletin 2025/28**

(21) Application number: **23859723.1**

(22) Date of filing: **11.05.2023**

(51) International Patent Classification (IPC):
*C08F 220/10 (2006.01)* *C08F 236/08 (2006.01)*
*C08F 236/22 (2006.01)* *C10M 143/12 (2006.01)*
*C10M 145/14 (2006.01)* *C10M 147/00 (2006.01)*
*C10M 149/04 (2006.01)* *C10M 153/02 (2006.01)*
*C10N 20/04 (2006.01)* *C10N 30/00 (2006.01)*
*C10N 30/06 (2006.01)* *C10N 40/04 (2006.01)*
*C10N 40/08 (2006.01)* *C10N 40/25 (2006.01)*

(52) Cooperative Patent Classification (CPC):
**C08F 220/10; C08F 236/08; C08F 236/22; C10M 143/12; C10M 145/14; C10M 147/00; C10M 149/04; C10M 153/02**

(86) International application number:
**PCT/JP2023/017736**

(87) International publication number:
**WO 2024/047952 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 JP 2022137528**
**31.08.2022 JP 2022137529**
**21.12.2022 JP 2022204508**
**03.03.2023 JP 2023032938**

(71) Applicant: **Mitsubishi Chemical Corporation**
**Tokyo 100-8251 (JP)**

(72) Inventors:
- **SATO, Eriko**
  **Tokyo 100-8251 (JP)**
- **AOKI, Yutaka**
  **Tokyo 100-8251 (JP)**
- **NIINO, Hiroshi**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **POLYMER, FRICTION MODIFIER, LUBRICANT ADDITIVE AND METHOD FOR PRODUCING SAME, AND LUBRICANT**

(57) A polymer comprising: a structural unit derived from a compound represented by the following formula (1); and, a structural unit derived from a (meth)acryloyl group-containing compound, wherein the polymer has a content of the structural unit derived from the compound represented by the following formula (1) of 15% by mass or more based on 100% by mass of a total of all structural units, and the polymer has a weight average molecular weight of 5,000 to 500,000.

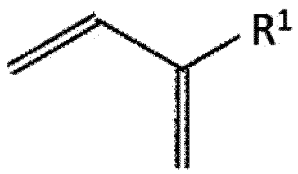

(1)

(In the formula (1), $R^1$ is a group represented by $C_nH_{2n+m}$. n is an integer of 1 to 30. m is either -3, -1, or 1. 2n+m is an integer of 3 or more.)

EP 4 582 462 A1

## Description

### Technical Field

The present invention relates to a polymer useful as a lubricating oil additive or a friction modifier, a friction modifier containing the polymer, a lubricating oil additive containing the polymer, a producing method thereof and a lubricating oil containing the lubricating oil additive.

### Background Art

Lubricating oils have been used in internal combustion engines, automatic transmissions, and other mechanical devices to facilitate their operation. In recent years, from the perspective of protecting the global environment, the fuel-saving performance required of lubricating oils has become increasingly high, and further improvement in the viscosity index, which is one of the indicators, and friction reduction ability are required. Lubricating oil additives are used to improve these physical properties.

Patent Literature 1 discloses a copolymer consisting of a structural unit derived from a conjugated diene and a structural unit derived from an aromatic vinyl compound. The copolymer described in Patent Literature 1 is used as a lubricating oil additive.

Patent Literature 2 discloses a copolymer of a (meth)acryloyl group-containing compound. The copolymer described in Patent Literature 2 is also used as a lubricating oil additive.

### Citation List

### Patent Literature

Patent Literature 1: WO 2014/142001

Patent Literature 2: JP 2017-197728 A

### Summary of Invention

### Technical Problem

The lubricating oil additive disclosed in Patent Literature 1 has a problem that its solubility in oil decreases when the content of structural units derived from aromatic vinyl compounds is high. In addition, Patent Literature 1 does not disclose the effect of reducing friction.

The copolymer disclosed in Patent Literature 2 is excellent in improving a viscosity index of a lubricating oil. However, Patent Literature 2 does not disclose a effect of reducing friction. In addition, Patent Literature 2 uses petroleum-derived monomers as raw materials, which does not meet recent social demands. In order to establish a carbon-circulating society, it is desirable to develop a different type of a lubricating oil additive that has the above mentioned effect and uses a monomer derived from a plant.

An object of the present invention is to provide a polymer that has structural units derived from a monomer derived from a plant and that is useful as a lubricating oil additive or a friction modifier that has excellent solubility in oil and friction reducing ability when added to oil, and a lubricating oil additive or a friction modifier that contains the polymer.

The fact that the monomer is derived from a plant can be confirmed by measuring a radioactive carbon concentration.

### Solution to Problem

In order to solve the above problem, the present invention includes the following aspects.

[1] A polymer comprising: a structural unit derived from a compound represented by the following formula (1); and, a structural unit derived from a (meth)acryloyl group-containing compound,
wherein the polymer has a content of the structural unit derived from the compound represented by the following formula (1) of 15% by mass or more based on 100% by mass of a total of all structural units, and the polymer has a weight average molecular weight of 5,000 to 500,000.

[Chem. 1]

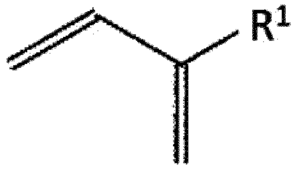

(1)

(In the formula (1), $R^1$ is a group represented by $C_nH_{2n+m}$. n is an integer of 1 to 30. m is either -3, -1, or 1. 2n+m is an integer of 3 or more.)

[2] The polymer according to [1], wherein in the formula (1), n is an integer of 1 to 11, m is either -3 or -1, and 2n+m is an integer of 3 to 19.

[3] The polymer according to [2], wherein in the formula (1), n is an integer of 6 to 11, and m is -1.

[4] The polymer according to [3], wherein in the formula (1), $R^1$ is a group represented by $C_6H_{11}$.

[5] A polymer comprising: a structural unit derived from myrcene; and, a structural unit derived from a (meth)acryloyl group-containing compound,
wherein the polymer has a content of the structural unit derived from myrcene of 15% by mass or more based on 100% by mass of a total of all structural units, and the polymer has a weight average molecular weight of 5,000 to 500,000.

[6] The polymer according to [5], wherein the content of the structural unit derived from myrcene is 31% by mass or more based on 100% by mass of the total of all structural units.

[7] The polymer according to any one of [1] to [6], wherein the (meth)acryloyl group-containing compound has a carbon number of 3 to 65.

[8] The polymer according to any one of [1] to [7], wherein the (meth)acryloyl group-containing compound has at least one functional group selected from the group consisting of an alkyl group, a hydroxyl group, a silyloxy group, a vinyl group, an ether group, an amino group, a carboxylic acid group, a fluorine atom, and a phosphate group.

[9] The polymer according to any one of [1] to [8], wherein the (meth)acryloyl group-containing compound is a (meth) acrylic acid alkyl ester.

[10] The polymer according to any one of [1] to [9], wherein the content of the structural units derived from a (meth) acryloyl group-containing compound is 0.1% by mass or more and less than 85% by mass based on 100% by mass of all structural units.

[11] The polymer according to any one of [1] to [10], being soluble in a solvent.

[12] A lubricating oil additive comprising the polymer according to any one of [1] to [11] and a solvent.

[13] The lubricating oil additive according to [12], wherein the solvent contains a mineral oil or a synthetic chemical oil.

[14] The lubricating oil additive according to [12] or [13], wherein the solvent contains 10% by mass or more of paraffin oil in 100% by mass of the solvent.

[15] The lubricating oil additive according to any one of [12] to [14], wherein the lubricating oil additive has an average value of a friction coefficient measured in the following friction coefficient measurement test of 0.190 or less.

<Friction coefficient measurement test>

The lubricating oil additive is applied on a surface of a φ24×7.9 mm SUJ-2 disk. The friction coefficient of the

surface is measured using a vibration friction and wear tester (SRV tester) with a φ10 mm SUJ-2 ball under conditions of a test temperature of 40°C, amplitude of 1 mm, and frequency of 50 Hz, with a load of 50 N for 30 seconds from the start of the test, and then changed to 200 N after the 30 seconds. The average value of the friction coefficients measured during the test time of 50 to 60 minutes is calculated.

[16] A lubricating oil containing the lubricating oil additive according to any one of [12] to [15].

[17] A friction modifier comprising: a polymer and a mineral oil or a synthetic chemical oil,

wherein the polymer comprising: a structural unit derived from a compound represented by the following formula (1); and, a structural unit derived from a (meth)acryloyl group-containing compound,

and the polymer has a content of the structural unit derived from the compound represented by the following formula (1) of 15% by mass or more based on 100% by mass of a total of all structural units.

[Chem. 2]

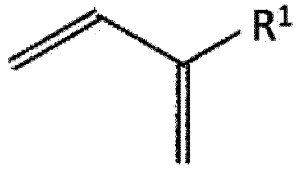

(1)

(In the formula (1), $R^1$ is a group represented by $C_nH_{2n+m}$. n is an integer of 1 to 30. m is either -3, -1, or 1. 2n+m is an integer of 3 or more.)

[18] The friction modifier according to [17], wherein the (meth)acryloyl group-containing compound has a carbon number of 3 to 65.

[19] The friction modifier according to [17] or [18], wherein the content of the structural units derived from the (meth)acryloyl group-containing compound is 0.1% by mass or more and less than 85% by mass based on 100% by mass of a total of all structural units of the polymer.

[20] A lubricating oil containing the friction modifier according to any one of [17] to [19].

[21] A method for producing a lubricating oil additive, the method comprising producing a polymer in a solvent,

the polymer comprising: a structural unit derived from a compound represented by the following formula (1); and, a structural unit derived from a (meth)acryloyl group-containing compound,

wherein the polymer has a content of the structural unit derived from the compound represented by the following formula (1) of 15% by mass or more based on 100% by mass of a total of all structural units, and the polymer has a weight average molecular weight of 5,000 to 500,000.

[Chem. 3]

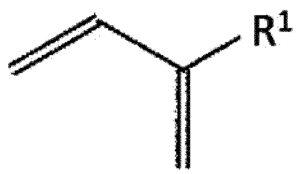

(1)

(In the formula (1), $R^1$ is a group represented by $C_nH_{2n+m}$. n is an integer of 1 to 30. m is either -3, -1, or 1. 2n+m is an integer of 3 or more.)

[22] A method for producing a lubricating oil additive, the method comprising producing a polymer in a solvent,

the polymer comprising: a structural unit derived from myrcene; and, a structural unit derived from a (meth)acryloyl group-containing compound,

wherein the polymer has a content of the structural unit derived from myrcene of 15% by mass or more based on 100% by mass of a total of all structural units, and the polymer has a weight average molecular weight of 5,000 to 500,000.

[23] The method for producing a lubricating oil additive according to [21] or [22], wherein the carbon number of the (meth)acryloyl group-containing compound is 3 to 65.

[24] The method for producing a lubricating oil additive according to any one of [21] to [23], wherein the solvent contains a mineral oil or a synthetic chemical oil.

[25] The method for producing a lubricating oil additive according to any one of [21] to [24], wherein the lubricating oil additive has an average value of a friction coefficient measured in the following friction coefficient measurement test of 0.190 or less.

<Friction coefficient measurement test>

The lubricating oil additive is applied on a surface of a φ24×7.9 mm SUJ-2 disk. The friction coefficient of the surface is measured using a vibration friction and wear tester (SRV tester) with a φ10 mm SUJ-2 ball under conditions of a test temperature of 40°C, amplitude of 1 mm, and frequency of 50 Hz, with a load of 50 N for 30 seconds from the start of the test, and then changed to 200 N after the 30 seconds. The average value of the friction coefficients measured during the test time of 50 to 60 minutes is calculated.

Advantageous Effects of Invention

The polymer of the present invention can be produced using a plant-derived monomer as a raw material, and the lubricating oil additive or friction modifier of the present invention containing the polymer exhibits excellent solubility in oil and friction reducing or adjusting ability when added to a lubricating oil.

Description of Embodiments

Hereinafter, the embodiments of the present invention will be described in detail. The explanation of the constituent elements described below is one example of the embodiment of the present invention, and the present invention is not limited to these contents, and can be carried out with various modifications within the scope of the gist.

[Explanation of terms]

In this specification, the following definitions of terms are adopted.

"Structural unit" means a unit that constitutes a polymer derived from a monomer, that is, a structural unit formed by polymerization of a monomer, or a structural unit in which a part of the structural unit is converted into a different structure by modifying a polymer.

The "polymer" according to the present invention means a copolymer containing a structural unit derived from a compound represented by the formula (1) described below (hereinafter sometimes referred to as "compound (1)") or myrcene, and a structural unit derived from a (meth)acryloyl group-containing compound.

The "(meth)acryloyl group" according to the present invention means one or both of an acryloyl group and a methacryloyl group.

The "(meth)acrylate" according to the present invention means one or both of an acrylate and a methacrylate.

The same applies to "(meth)acrylic".

The "(meth)acryloyl group" according to the present invention means the portion other than the "R" portion of an alkyl methacrylate represented by the following formula (2A) or an alkyl acrylate represented by the following formula (2B).

[Chem. 1]

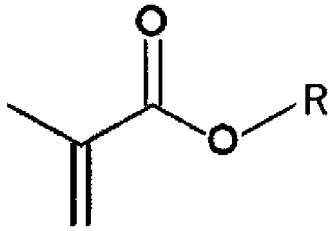

(2A)

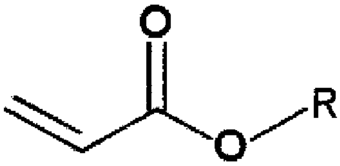

(2B)

In this specification, the terms "weight average molecular weight" and "number average molecular weight" refer to the weight average molecular weight and number average molecular weight, respectively, measured by gel permeation chromatography (GPC) and calculated as polystyrene standard.

"Mineral oil" refers to base oil produced by refining crude oil, and means paraffin oil and naphthenic oil.

"Synthetic chemical oil" refers to PAO (poly-α-olefin), polybutene, ethylene propylene copolymer (EPO), aliphatic ester, GTL (Gas to Liquid), alkylbenzene, silicone oil, and polyalkylene glycol (PAG).

The term "dissolved" or "soluble" means that when a solution containing the polymer is left to stand at 25°C for one day, no precipitation of insoluble matter or clouding of the solution is observed with the naked eye.

(Polymer I)

The polymer according to one embodiment of the present invention (hereinafter, sometimes referred to as "polymer I") is a polymer that contains a structural unit derived from a compound (compound (1)) represented by the following formula (1) (hereinafter, sometimes referred to as "compound (1) unit") and a structural unit derived from a (meth) acryloyl group-containing compound (hereinafter, sometimes referred to as "(meth)acryloyl group-containing compound unit"), in which the content of the compound (1) unit is 15% by mass or more based on 100% by mass of the total of all structural units, and the weight average molecular weight is 5,000 to 500,000.

[Chem. 1]

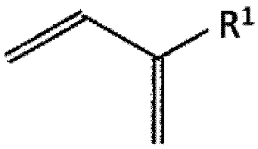

(1)

(In the formula (1), $R^1$ is a group represented by $C_nH_{2n+m}$. n is an integer of 1 to 30. m is either -3, -1, or 1. 2n+m is an integer of 3 or more.)

The polymer I may further contain other structural units (hereinafter, sometimes referred to as "other structural units") other than the compound (1) units and the (meth)acryloyl group-containing compound units.

[Structural units of the polymer I]

The compound (1) units, (meth)acryloyl group-containing compound units, and other structural units constituting the polymer I will be described in detail below.

<Compound (1) units>

The polymer I contains the compound (1) units derived from the compound (1) represented by the above mentioned formula (1). The compound (1) units are preferably derived from a monomer obtained from a plant.

In the above mentioned formula (1), $R^1$ is a group represented by $C_nH_{2n+m}$, n is an integer from 1 to 30. m is either -3, -1, or 1. 2n+m is an integer of 3 or more.

In other words, $R^1$ is a group represented by at least one selected from $C_nH_{2n+1}$, $C_nH_{2n-1}$, and $C_nH_{2n-3}$.

From the viewpoint of solubility in oil and friction adjusting ability, these are preferably as follows.

m is preferably -3 or -1, and more preferably -1.

n is an integer from 1 to 30. n is preferably an integer from 1 to 26, more preferably an integer from 1 to 11, and even more preferably an integer from 6 to 11. It is particularly preferable that n is 6.

2n+m is an integer of 3 or more. 2n+m is preferably an integer from 3 to 19, and more preferably an integer from 11 to 19.

$R^1$ is most preferably $C_6H_{11}$.

The compound (1) unit is preferably a structural unit derived from at least one of isoprene, myrcene, and farnesene.

From the viewpoint of handling during polymerization, the compound (1) unit is preferably a structural unit derived from at least one of myrcene and farnesene. Both of these are available as monomers derived from plants, and are preferable from the viewpoint of establishing a carbon-recycling society.

The compound (1) unit is most preferably myrcene, in which $R^1$ in the formula (1) is $C_6H_{11}$. When the compound (1) is myrcene, the polymer I is equivalent to the polymer II described below.

The polymer of the present invention may contain only one type of the compound (1) unit, or may contain two or more types.

The lower limit of the content of the compound (1) units is 15% by mass or more, preferably 31% by mass or more, more preferably 35% by mass or more, and even more preferably 40% by mass or more based on 100% by mass of all structural units of the polymer I, from the viewpoints of including raw materials derived from plants and improving solubility in oil. On the other hand, the upper limit of the content of the compound (1) units is preferably 99.9% by mass or less, and more preferably 99.7% by mass or less, from the viewpoint of friction reduction ability.

The ratio of the compound (1) units based on 100% by mass of all structural units of the polymer I can be calculated from the amount of the compound (1) charged to introduce the compound (1) units as a raw material monomer of the polymer of the present invention.

<(Meth)acryloyl group-containing compound units>

The polymer I further contains (meth)acryloyl group-containing compound units in addition to the compound (1) units.

Examples of the (meth)acryloyl group-containing compound constituting the (meth)acryloyl group-containing compound unit include (meth)acrylic acid alkyl esters of linear or branched alkyl alcohols such as methyl (meth)acrylate, ethyl (meth)acrylate, butyl (meth)acrylate, propyl (meth)acrylate, hexyl (meth)acrylate, 2-ethylhexyl (meth)acrylate, octyl (meth)acrylate, dodecyl (meth)acrylate, tridecyl (meth)acrylate, and the like; and (meth)acrylic acid alkyl esters of cyclic alkyl alcohols such as cyclohexyl (meth)acrylate, and the like.

In addition, (meth)acryloyl group-containing compounds having the functional groups described below and (meth)acryloyl group-containing compounds of the (meth)acryloyl group-containing compound units constituting the polymer II described below can also be used.

Among these, a (meth)acrylic acid alkyl ester which may have a functional group is particularly preferably as the (meth)acryloyl group-containing compound, from the viewpoint of friction reducing ability.

From the viewpoint of improving friction reducing ability, the upper limit of the number of carbon atoms in the alkyl group in the (meth)acryloyl group-containing compound, such as the (meth)acrylic acid alkyl ester, is preferably 60 or less, and more preferably 55 or less. On the other hand, from the viewpoint of improving solubility in oil, the lower limit of the number of carbon atoms in the alkyl group in the (meth)acryloyl group-containing compound is preferably 1 or more, and more preferably 2 or more.

The "alkyl group" is a functional group which can be expressed as $C_pH_{(2p+1)}$-, and as described above, p is preferably an integer in the range of 1 to 60. Among these, from the viewpoint of improving solubility in oil, p is more preferably an integer in the range of 2 to 60.

Furthermore, from the viewpoint of improving friction reducing ability, the upper limit of the total number of carbon atoms in the (meth)acryloyl group-containing compound is preferably 65 or less, and more preferably 60 or less. On the other hand, the total number of carbon atoms in the (meth)acryloyl group-containing compound is preferably 3 or more, and may be 4 or more.

From the viewpoint of improving the friction reducing ability, the (meth)acryloyl group-containing compound of the (meth)acryloyl group-containing compound unit preferably has at least one functional group selected from the group consisting of an alkyl group, a hydroxyl group, a silyloxy group, a vinyl group, an ether group, an amino group, a carboxylic acid group, an epoxy group, a fluorine atom, and a phosphate group. Among these, it is preferable that the (meth)acryloyl

group-containing compound has at least one functional group selected from the group consisting of an alkyl group, a hydroxyl group, a silyloxy group, a vinyl group, an ether group, an amino group, a carboxylic acid group, a fluorine atom, and a phosphate group.

Examples of the (meth)acryloyl group-containing compounds having a hydroxyl group, a silyloxy group, a vinyl group, an amino group, an ether group, or a fluorine atom include (meth)acrylates containing a hydroxyl group and/or an ether group at the terminal, such as polyethylene glycol mono(meth)acrylate, polypropylene glycol mono(meth)acrylate, polyethylene glycol-propylene glycol-mono(meth)acrylate, polyethylene glycol-tetramethylene glycol-mono(meth)acrylate, propylene glycol-polybutylene glycol-mono(meth)acrylate, and the like; (meth)acrylates containing a silyloxy group, such as 2-(trimethylsilyloxy) (meth)acrylate, 3-(methyldimethoxysilyl)propyl(meth)acrylate, 3-(methoxysilyl)propyl(meth) acrylate, 3-(triethoxysilyl)propyl(meth)acrylate, 3-(trimethoxysilyl)propyl (meth)acrylate, and the like; (meth)acrylates containing a vinyl group, such as allyl (meth)acrylate, and the like; di(meth)acrylates, such as 1,3-butanediol di(meth) acrylate, and the like; (meth)acrylates containing an amino group, such as 2-(dimethylamino)ethyl (meth)acrylate, and the like; (meth)acrylates containing a fluorine atom, such as 2,2,2-trifluoroethyl (meth)acrylate, 2,2,3,3-tetrafluoropropyl (meth)acrylate, 1H,1H,5H-octafluoropentyl (meth)acrylate, 1H,1H,2H,2H-tridecafluorooctyl acrylate, 2,2,2-trifluoroethyl, and the like.

The polymer I may contain only one type of such (meth)acryloyl group-containing compound unit, or may contain two or more types.

The upper limit of the content of the (meth)acryloyl group-containing compound units is preferably less than 85% by mass, more preferably 50% by mass or less, even more preferably 45% by mass or less, and particularly preferably 40% by mass or less based on 100% by mass of all structural units of the polymer I, from the viewpoint of improving the solubility in oil and from the viewpoint of ensuring a sufficient content of the plant-derived compound (1), such as myrcene units. On the other hand, from the viewpoint of improving the friction reducing ability, the lower limit of the content of the (meth) acryloyl group-containing compound units is preferably 0.1% by mass or more, more preferably 0.2% by mass or more, and even more preferably 0.3% by mass or more.

The ratio of the (meth)acryloyl group-containing compound units based on 100% by mass of all structural units of the polymer I can be calculated from the amount of the (meth)acryloyl group-containing compound charged for the purpose of introducing the (meth)acryloyl group-containing compound units as the raw material monomer of the polymer I.

<Other structural units>

The other structural units are structural units other than the above mentioned compound (1) units and (meth) acryloyl group-containing compound units.

Examples of other raw material monomers used for the purpose of introducing the other structural units into the polymer I include vinyl cyanide monomers such as acrylonitrile, methacrylonitril, and the like; vinyl ether monomers such as vinyl methyl ether, vinyl ethyl ether, and the like; carboxylic acid vinyl monomers such as vinyl acetate, vinyl butyrate, and the like; olefin monomers such as ethylene, propylene, isobutylene, and the like; halogenated vinyl monomers such as vinyl chloride, vinylidene chloride, and the like; and maleimide monomers such as maleimide, N-phenylmaleimide, **N**-cyclohexylmaleimide, N-methylmaleimide, and the like. These may be used alone or in combination of two or more.

The content of the other structural units is preferably 60% by mass or less, and more preferably 50% by mass or less based on 100% by mass of all structural units of the polymer I. This is because the content of the other structural units is 60% by mass or less, thereby improving the solubility in oil when added to oil.

The ratio of the other structural units based on 100% by mass of all structural units of the polymer I can be calculated from the amount of the other monomers charged to introduce the other structural units as a raw material monomer of the polymer I.

[Weight average molecular weight (Mw) of the polymer I]

The lower limit of the weight average molecular weight of the polymer I is 5,000 or more, preferably 6,000 or more, and more preferably 7,000 or more, from the viewpoint of friction reduction ability. On the other hand, the upper limit of the weight average molecular weight of the polymer I is 500,000 or less, preferably 300,000 or less, and more preferably 250,000 or less, from the viewpoint of solubility in oil.

[Number average molecular weight (Mn) of the polymer I]

The lower limit of the number average molecular weight of the polymer I is preferably 5,000 or more, and more preferably 6,000 or more, from the viewpoint of friction reduction ability. On the other hand, the upper limit of the number average molecular weight of the polymer of the present invention is preferably 300,000 or less, and more preferably 250,000 or less, from the viewpoint of solubility in oil.

[Solubility of the polymer I in solvent]

The polymer I is preferably soluble in a solvent.
Although the solvent is not particularly limited, examples include a mineral oil or a synthetic chemical oil used in the lubricating oil additive of the present invention described below.

[Polymer II]

The polymer according to another embodiment of the present invention (hereinafter, sometimes referred to as "polymer II") is a polymer that contains a structural unit derived from myrcene (hereinafter, sometimes referred to as "myrcene unit") and a structural unit derived from a (meth)acryloyl group-containing compound (hereinafter, sometimes referred to as "(meth)acryloyl group-containing compound unit"), in which the content of the myrcene unit is 15% by mass or more based on 100% by mass of the total of all structural units, and the weight average molecular weight is 5,000 to 500,000.
The polymer II may further contain other structural units (hereinafter, sometimes referred to as "other structural units") other than the myrcene units and the (meth)acryloyl group-containing compound units.

[Structural units of the polymer II]

The myrcene units, (meth)acryloyl group-containing compound units, and other structural units constituting the polymer II will be described in detail below.

<Myrcene units>

The polymer II contains myrcene units. Myrcene is available as a plant-derived monomer, and is preferable from the viewpoint of establishing a carbon-recycling society.
The lower limit of the content of the myrcene units is 15% by mass or more, preferably 31% by mass or more, more preferably 35% by mass or more, and even more preferably 40% by mass or more based on 100% by mass of all structural units of the polymer II, from the viewpoint of including raw materials derived from plants and improving solubility in oil. On the other hand, the upper limit of the content of the myrcene units is preferably 99% by mass or less, and particularly preferably 90% by mass or less, from the viewpoint of improving friction reduction ability.
The ratio of the myrcene units based on 100% by mass of all structural units of the polymer II can be calculated from the amount of myrcene charged to introduce the myrcene units as a raw material monomer of the polymer II.

<(Meth)acryloyl group-containing compound units>

The polymer II further contains (meth)acryloyl group-containing compound units in addition to the myrcene units.
Examples of the (meth)acryloyl group-containing compound constituting the (meth)acryloyl group-containing compound unit include (meth)acrylic acid alkyl esters, i.e., various (meth)acryloyl group-containing compounds such as alkyl (meth)acrylates, (meth)acrylic acid, (meth)acrylamide, polyalkylene glycol (meth)acrylates, hydroxyalkyl (meth) acrylates, alkylsilyloxy (meth)acrylates, alkoxysilylalkyl (meth)acrylates, alkenyl (meth)acrylates, glycidyl (meth)acrylates, fluoroalkyl (meth)acrylates, (meth)acryloylalkyl acid phosphates, and the like, but are not limited to thereto.
Examples of (meth)acryloyl group-containing compounds include (meth)acrylic acid alkyl esters of linear or branched alkyl alcohols such as ethyl (meth)acrylate, butyl (meth)acrylate, propyl (meth)acrylate, hexyl (meth)acrylate, 2-ethylhexyl (meth)acrylate, octyl (meth)acrylate, dodecyl (meth)acrylate, tridecyl (meth)acrylate, and the like; (meth)acrylic acid alkyl esters of cyclic alkyl alcohols such as cyclohexyl (meth)acrylate, and the like; (meth)acrylates containing a hydroxyl and/or an ether group at the terminal, such as polyethylene glycol mono(meth)acrylate, polypropylene glycol mono(meth)acrylate, polyethylene glycol-propylene glycol-mono(meth)acrylate, polyethylene glycol-tetramethylene glycol-mono(meth)acrylate, polypropylene glycol-polybutylene glycol-mono(meth)acrylate, methoxypolyethylene glycol monomethacrylate, methoxypolypropyl glycol monomethacrylate, glycerin mono(meth)acrylate, 4-hydroxybutyl (meth) acrylate, hydroxyethyl (meth)acrylate, and the like; (meth)acrylates containing a silyloxy group, such as 2-(trimethylsilyloxy) (meth)acrylate, 3-(methyldimethoxysilyl)propyl(meth)acrylate, 3-(methoxysilyl)propyl(meth)acrylate, 3-(triethoxysilyl)propyl(meth)acrylate, 3-(trimethoxysilyl)propyl(meth)acrylate, and the like; (meth)acrylates containing a vinyl group, such as allyl(meth)acrylate, and the like; di(meth)acrylates, such as 1,3-butanediol di(meth)acrylate, and the like; (meth)acrylates containing an amino group, such as 2-(dimethylamino)ethyl(meth)acrylate, diethylacrylamide, and the like; (meth)acrylates containing a carboxylic acid group, such as (meth)acrylic acid, and the like; (meth)acrylates containing an epoxy group, such as glycidyl (meth)acrylate, and the like; (meth)acrylates containing a fluoroalkyl group, such as 2,2,2-trifluoroethyl (meth)acrylate, 2,2,3,3-tetrafluoropropyl (meth)acrylate, 1H,1H,5H-octafluoropentyl (meth)acrylate, 1H,1H,2H,2H-tridecafluorooctyl acrylate, 2,2,2-trifluoroethyl, and the like; (meth)acrylates containing a phosphoric acid group, such as 2-methacryloyloxyethyl acid phosphate, 2-methacryloyloxyethyl acid phosphate, and the like.

Among these, an (meth)acrylic acid alkyl ester is preferably as the (meth)acryloyl group-containing compound of the (meth)acryloyl group-containing compound unit, from the viewpoint of improving friction reducing ability.

From the viewpoint of improving the friction reducing ability, the upper limit of the carbon number of the (meth) acryloyl group-containing compound is preferably 65 or less, and more preferably 60 or less. On the other hand, from the viewpoint of improving the solubility in oil, the lower limit of the carbon number of the (meth)acryloyl group-containing compound is preferably 3 or more, or 4 or more.

Furthermore, from the viewpoint of improving the friction reducing ability, the (meth)acryloyl group-containing compound preferably has at least one functional group selected from the group consisting of an alkyl group, a hydroxyl group, a silyloxy group, a vinyl group, an ether group, an amino group, a carboxylic acid group, an epoxy group, a fluorine atom, and a phosphate group. Among these, it is preferable that the (meth)acryloyl group-containing compound has at least one functional group selected from the group consisting of an alkyl group, a hydroxyl group, a silyloxy group, a vinyl group, an ether group, an amino group, a carboxylic acid group, a fluorine atom, and a phosphate group.

Among the (meth)acryloyl group-containing compounds, in the case of (meth)acrylic acid alkyl esters or (meth) acrylic acid alkyl esters having a functional group such as the above mentioned hydroxyl group, and the like, the number of carbon atoms in the alkyl group contained in the (meth)acrylic acid alkyl ester is preferably in the range of 1 to 60, and particularly preferably in the range of 2 to 55.

As described above, an "alkyl group" is a functional group which can be expressed as $C_pH_{(2p+1)}{}^-$, where p is preferably an integer in the range of 1 to 60. Among these, from the viewpoint of improving solubility in oil, p is more preferably an integer in the range of 2 to 60.

The polymer II may contain only one type of such (meth)acryloyl group-containing compound unit, or may contain two or more types.

The upper limit of the content of the (meth)acryloyl group-containing compound units is preferably less than 85% by mass, more preferably 69% by mass or less, even more preferably 65% by mass or less, and particularly preferably 60% by mass or less based on 100% by mass of all structural units of the polymer II, from the viewpoint of improving the solubility in oil and from the viewpoint of ensuring a sufficient content of the plant-derived myrcene units. On the other hand, from the viewpoint of improving the friction reducing ability, the lower limit of the content of the (meth)acryloyl group-containing compound units is preferably 0.1% by mass or more, particularly preferably 1% by mass or more, and especially preferably 5% by mass or more.

The ratio of the (meth)acryloyl group-containing compound units based on 100% by mass of all structural units of the polymer II can be calculated from the amount of the (meth)acryloyl group-containing compound charged for the purpose of introducing the (meth)acryloyl group-containing compound units as the raw material monomer of the polymer II.

<Other structural units>

The other structural units are structural units other than the above mentioned myrcene units and (meth)acryloyl group-containing compound units.

Examples of other raw material monomers used for the purpose of introducing the other structural units into the polymer II include vinyl cyanide monomers such as acrylonitrile, methacrylonitril, and the like; vinyl ether monomers such as vinyl methyl ether, vinyl ethyl ether, and the like; carboxylic acid vinyl monomers such as vinyl acetate, vinyl butyrate, and the like; olefin monomers such as ethylene, propylene, isobutylene, and the like; halogenated vinyl monomers such as vinyl chloride, vinylidene chloride, and the like; and maleimide monomers such as maleimide, N-phenylmaleimide, N-cyclohexylmaleimide, N-methylmaleimide, and the like. These may be used alone or in combination of two or more.

The content of the other structural units is preferably 60% by mass or less, and more preferably 50% by mass or less based on 100% by mass of the total of all structural units of the polymer II. This is because the content of the other structural units is 60% by mass or less, thereby improving the solubility in oil when added to oil.

The ratio of the other structural units based on 100% by mass of the total of all structural units of the polymer II can be calculated from the amount of the other monomers charged to introduce the other structural units as a raw material monomer of the polymer II.

[Weight average molecular weight (Mw) of the polymer II]

The lower limit of the weight average molecular weight of the polymer II is 5,000 or more, preferably 6,000 or more, and more preferably 7,000 or more, from the viewpoint of friction reduction ability. On the other hand, the upper limit of the weight average molecular weight of the polymer II is 500,000 or less, preferably 300,000 or less, and more preferably 250,000 or less, from the viewpoint of solubility in oil.

[Number average molecular weight (Mn) of the polymer II]

The lower limit of the number average molecular weight of the polymer II is preferably 5,000 or more, and more preferably 6,000 or more, from the viewpoint of friction reduction ability. On the other hand, the upper limit of the number average molecular weight of the polymer II is preferably 300,000 or less, and more preferably 250,000 or less, from the viewpoint of solubility in oil.

[Solubility of the polymer II in solvent]

The polymer II is preferably soluble in a solvent.
Although the solvent is not particularly limited, examples include a mineral oil or a synthetic chemical oil used in the lubricating oil additive of the present invention described below.

(Lubricating oil additive)

The lubricating oil additive of the present invention contains the above mentioned polymer I or polymer II (hereinafter, these sometimes referred to as the "polymer of the present invention") and a solvent.
The lubricating oil additive of the present invention may contain only one type of the polymer of the present invention, or may contain two or more types of the polymers differing in the type of structural unit, composition, and the like.
Examples of the solvent contained in the lubricating oil additive of the present invention include one or more of oil components such as paraffinic, naphthenic, aromatic, PAO (poly-$\alpha$-olefin), polybutene, ethylene propylene copolymer (EPO), aliphatic ester, GTL (gas to liquid), alkylbenzene, silicone oil, polyalkylene glycol (PAG), and the like, as a base oil.
In particular, from the viewpoint of dispersibility, it is preferable that the lubricating oil additive of the present invention has the polymer of the present invention dissolved in the base oil as a solvent. In this case, the base oil as a solvent preferably contains one or more of oils selected from the group consisting of mineral oils such as paraffin oil and naphthenic oil, and synthetic chemical oils such as PAO (poly-$\alpha$-olefin), polybutene, ethylene propylene copolymer (EPO), aliphatic ester, GTL (Gas To Liquid), alkylbenzene, silicone oil, and polyalkylene glycol (PAG).
The lubricating oil additive of the present invention preferably contains paraffin oil in an amount of 10% by mass or more, particularly 15% by mass or more, and especially 20 to 100% by mass based on 100% by mass of the base oil.
The lubricating oil additive of the present invention may contain various additives in addition to the polymer of the present invention and the solvent.
Examples of the various additives include cleaning agents, dispersants, antioxidants, oiliness improvers, friction and wear modifiers, extreme pressure agents, antifoaming agents, demulsifiers, corrosion inhibitors, and the like.
The content of the polymer of the present invention in the lubricating oil additive of the present invention is preferably 0.1 to 100% by mass based on 100% by mass of the total of all components of the lubricating oil additive. The lubricating oil additive of the present invention preferably contains 0.1 to 90 parts by mass of the polymer of the present invention based on 100 parts by mass of the solvent as the base oil.
The lubricating oil additive of the present invention may be a grease containing a thickening agent. Examples of thickening agents include soap-based thickening agents (lithium soap, calcium soap, sodium soap, aluminum soap, and the like), inorganic thickening agents (bentonite, silica gel, and the like), and organic thickening agents (polyurea, polyurethane, and the like), and the like.
When the lubricating oil additive of the present invention is used in various lubricating oils such as drive system lubricating oils, automatic transmission oils, hydraulic oils, engine oils, and the like, the friction coefficient measured by the following method is preferably 0.190 or less. When the friction coefficient is equal to or less than the above upper limit, it is possible to reduce fuel consumption of cars and gear wear can be reduced when the lubricating oil additive is used in the above applications. Particularly, this friction coefficient is preferably 0.160 or less, and more preferably 0.140 or less.
The content of the polymer of the present invention in the lubricating oil additive used in the following friction coefficient measurement test is usually 2% by mass.

<Friction coefficient measurement test>

The lubricating oil additive is applied on a surface of a $\varphi$24×7.9 mm SUJ-2 disk. The friction coefficient of the surface is measured using a vibration friction and wear tester (SRV tester) with a $\varphi$10 mm SUJ-2 ball under conditions of a test temperature of 40°C, amplitude of 1 **mm,** and frequency of 50 Hz, with a load of 50 N for 30 seconds from the start of the test, and then changed to 200 N after the 30 seconds. The average value of the friction coefficients measured during the test time of 50 to 60 minutes is calculated.
Details of the method for measuring the friction coefficient are as described in the Examples section below.

[Method for producing the lubricating oil additive]

The method for producing the lubricating oil additive of the present invention is a method for producing the polymer I containing the compound (1) units and (meth)acryloyl group-containing compound units, and having a content of the compound (1) units of 15% by mass or more based on 100% by mass of the total of all structural units, and a weight average molecular weight of 5,000 to 500,000, or the polymer II containing the myrcene units and (meth)acryloyl group-containing compound units, and having a content of the myrcene units of 15% by mass or more based on 100% by mass of the total of all structural units, and weight average molecular weight of 5,000 to 500,000, in a solvent.

In other words, the method for producing the lubricating oil additive of the present invention includes a step of producing the polymer of the present invention in a solvent.

Here, the above mentioned explanations of the polymer of the present invention are applied to the polymer I and the polymer II.

The method for producing the polymer of the present invention is not particularly limited. The polymer of the present invention can be produced by polymerizing the compound (1) such as myrcene for introducing the compound (1) unit such as the myrcene unit, a (meth)acryloyl group-containing compound for introducing the (meth)acryloyl group-containing compound unit, and other monomers for introducing the other structural units as necessary as raw material monomers in the above mentioned suitable ratio, by a known polymerization method such as a solution polymerization method, a suspension polymerization method, a bulk polymerization method, an emulsion polymerization method, or the like.

Among these methods, in order to produce the lubricating oil additive of the present invention containing the polymer of the present invention and a solvent, a solution polymerization method using a solvent is adopted from the viewpoint of compatibility with the lubricating oil additive.

Hereinafter, a method for producing the lubricating oil additive of the present invention by a solution polymerization method will be described in detail.

In the solution polymerization method, the compound (1) such as myrcene for introducing the compound (1) units such as the myrcene units, the (meth)acryloyl group-containing compound for introducing the (meth)acryloyl group-containing compound units, and the other monomers for introducing the other structural units as necessary are used in the above mentioned suitable ratio as raw material monomers, and are polymerized in the presence of a polymerization initiator in a reaction solvent (polymerization solvent).

By using the solution polymerization method, the lubricating oil additive of the present invention can be produced simultaneously with the production of the polymer of the present invention.

<Polymerization initiator>

When producing the lubricating oil additive of the present invention, a known radical polymerization initiator may be used and the production may be carried out by a known method.

Examples of the radical polymerization initiator include organic peroxides, azo compounds, and the like. The radical polymerization initiator can be used alone or in combination of two or more.

Specific examples of suitable organic peroxides used as radical polymerization initiators include t-butyl peroxypivalate, o-methylbenzoyl peroxide, bis-3,5,5-trimethylhexanoyl peroxide, octanoyl peroxide, cyclohexanone peroxide, benzoyl peroxide, methyl ethyl ketone peroxide, dicumyl peroxide, lauroyl peroxide, diisopropylbenzene hydroperoxide, t-butyl hydroperoxide, di-t-butyl peroxide, t-butylperoxy-2-ethylhexanoate, 1,1,3,3-tetramethylbutylperoxy-2-ethylhexanoate, and the like.

Specific examples of azo compounds include 2,2'-azobisisobutyronitrile, 2,2'-azobis(2,4-dimethylvaleronitrile), 2,2'-azobis(2,4-dimethyl-4-methoxyvaleronitrile), and the like.

Among these, 1,1,3,3-tetramethylbutylperoxy-2-ethylhexanoate, and the like are preferred.

<Polymerization solvent>

When producing the lubricating oil additive of the present invention, a general organic solvent can be used as the polymerization solvent.

From the viewpoint of compatibility with the lubricating oil additive, it is preferable to use at least one of the mineral oil and synthetic chemical oil as the polymerization solvent. Among these, paraffin oil is preferably used. In this case, the reaction product containing the mineral oil and/or synthetic chemical oil, preferably paraffin oil, used as the polymerization solvent and the obtained polymer can be used as the lubricating oil additive of the present invention.

From the viewpoint of polymerization control, it is preferable that the polymerization solvent contains 10% by mass or more of paraffin oil based on 100% by mass of the total amount of the solvent. In particular, the content of a paraffin oil is preferably 15% by mass or more, and especially preferably 20 to 100% by mass.

[Friction modifier]

The friction modifier of the present invention contains a polymer containing the compound (1) unit and the (meth) acryloyl group-containing compound unit, and having a content of the compound (1) unit of 15% by mass or more based on 100% by mass of all structural units, and a mineral oil or a synthetic chemical oil.
The polymer contained in the friction modifier of the present invention is preferably the above mentioned polymer (I), and more preferably the above mentioned polymer (II).
The friction modifier of the present invention uses the above mentioned lubricating oil additive of the present invention as a friction modifier, and the explanation of the above mentioned lubricating oil additive can be applied to the contained polymer, mineral oil, and synthetic chemical oil.

(Lubricating oil)

The lubricating oil of the present invention contains the lubricating oil additive of the present invention or the friction modifier of the present invention. Specific examples of the lubricating oil include various lubricating oils such as drive system lubricating oils, automatic transmission oils, hydraulic oils, engine oils, and the like.
The content of the lubricating oil additive of the present invention or the friction modifier of the present invention in these lubricating oils is not particularly limited. The content of the lubricating oil additive of the present invention or the friction modifier of the present invention in these lubricating oils is preferably such that the content of the polymer of the present invention in the lubricating oil is 0.01% by mass or more, and particularly 0.1% by mass or more, and 50% by mass or less, and particularly 40% by mass or less, in order to effectively obtain the friction reducing or friction adjusting effect.

Example

The present invention will be described in detail below with reference to Examples and Comparative Examples. The present invention is not limited by the following description.

<Ratio of structural units>

The ratio of each structural unit in the polymer was calculated from the amount of monomer charged. The ratio of the myrcene units based on 100% by mass of the total of all structural units of the polymer was calculated from the amount of myrcene charged. The ratio of the (meth)acryloyl group-containing compound units based on 100% by mass of the total of all structural units of the polymer was calculated from the amount of the (meth)acryloyl group-containing compound charged.

<Weight average molecular weight (Mw) and number average molecular weight (Mn) >

The weight average molecular weight (Mw) and number average molecular weight (Mn) of the polymer were determined by GPC (gel permeation chromatography) using standard polystyrene equivalent molecular weight. The measuring device and conditions are as follows.

- Apparatus: HLC-8420GPC, manufactured by Tosoh Corporation
- Separation column: TSK-GEL SUPER HM-H (exclusion limit molecular weight = 4 x $10^8$)

6.0 mm diameter x 150 mm

- Detector: RI (differential refractometer), UV
- Eluent: Tetrahydrofuran (THF)
- Flow rate: 0.600 mL/min
- Sample concentration: 0.02 g/10 mL
- Column temperature: 40°C

<Confirmation of solution state>

The transparency of the polymerization solution was visually confirmed and evaluated as follows.

○: Transparent
×: Opaque or insoluble matter precipitated

<Measurement of friction coefficient>

A solution diluted with lubricating base oil (manufactured by SK Lubricants Co., Ltd., product name: YUBASE4) so that the polymer content was 2% by mass was applied to the following disk, and the friction coefficient was measured under the ball-on-disk test conditions using the following measuring equipment. The average value of the friction coefficients measured 50 to 60 minutes after the start of the test was taken as the friction coefficient.

· Equipment: Vibration friction and wear tester (SRV tester)

· Disc: Made of SUJ-2, φ24 x 7.9 mm

· Ball: Made of SUJ-2, φ10 mm

· Temperature: 40°C

· Load: 50N for 30 seconds from the start of the test, and 200N after the 30 seconds

· Amplitude: 1mm

· Frequency: 50Hz

· Test time: 60 minutes

(Example 1)

33.3 parts by mass of lubricating base oil (manufactured by SK Lubricants Co., Ltd., product name: YUBASE4), 60 parts by mass of alkyl methacrylate (manufactured by Mitsubishi Chemical Corporation, product name: ACRYESTER SL, number of carbon atoms in alkyl group: 12 to 13), and 40 parts by mass of myrcene (manufactured by Yasuhara Chemical Co., Ltd.) were charged into a dried Schlenk tube, and the atmosphere inside the Schlenk tube was thoroughly replaced with nitrogen, and then the temperature was raised to 100°C. Next, 2.2 parts by mass of 1,1,3,3-tetramethylbutylperoxy-2-ethylhexanoate manufactured by NOF Corporation, product name: Perocta O) was added as a polymerization initiator, and the reaction was carried out for 10 hours. The obtained polymerization solution was used as a lubricating oil additive and the various evaluations described above were carried out. The results are shown in Table 1.

(Examples 2-22, Comparative Examples 2-3)

The polymerization solutions were obtained in the same manner as in Example 1, using the amount of each raw material shown in Tables 1 to 3. Various evaluations were carried out using the obtained polymerization solutions. The results are shown in Tables 1 to 3.

[Comparative Example 1]

Various evaluations were carried out using only lubricating base oil (manufactured by SK Lubricants Co., Ltd., product name: YUBASE4). The results are shown in Table 3.

The abbreviations for the raw material monomers in Tables 1 to 3 are as follows.

SLMA: A mixture of an alkyl methacrylate having an alkyl group having 12 carbon atoms and an alkyl methacrylate having an alkyl group having 13 carbon atoms (Acryester SL, manufactured by Mitsubishi Chemical Corporation)

Blemmer PP-800: Polypropylene glycol monomethacrylate (manufactured by NOF Corporation, a compound represented by the following formula (3))

[Chem. 2]

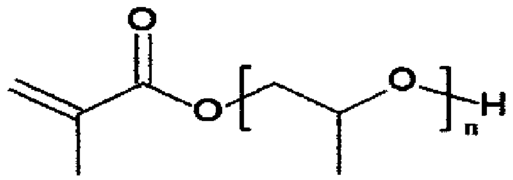

(3)

n=13

Blemmer AP-400: Polypropylene glycol monoacrylate (manufactured by NOF Corporation, a compound represented by the following formula (4))

[Chem. 3]

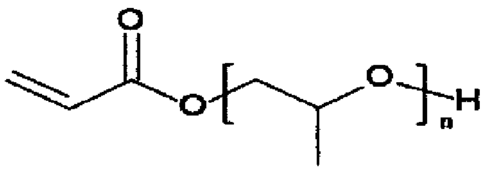

(4)

n=6

2TMSO-EMA: 2-(trimethylsilyloxy)ethyl methacrylate (manufactured by Tokyo Chemical Industry Co., Ltd.)

KBM-503: 3-methacryloxypropyltrimethoxysilane (manufactured by Shin-Etsu Chemical Co., Ltd.)

AMA: Allyl methacrylate (manufactured by Kanto Chemical Co., Ltd., Acryester A)

Viscoat 8FM: 1H,1H,5H-octafluoropentyl methacrylate (manufactured by Osaka Organic Chemical Industry Ltd.)

4HBA: 4-hydroxybutyl acrylate (manufactured by Mitsubishi Chemical Corporation)

Blemmer GLM: Glycerin monomethacrylate (manufactured by NOF Corporation, Blemmer GLM-EX)

AA: Acrylic acid

DEAA: Diethylacrylamide

MAA: Methacrylic acid

P-1M: 2-methacryloyloxyethyl acid phosphate (manufactured by Kyoeisha Chemical Co., Ltd., Light Ester P-1M)

Blemmer PE-350: Polyethylene glycol monomethacrylate (manufactured by NOF Corporation, a compound represented by the following formula (5))

[Chem. 4]

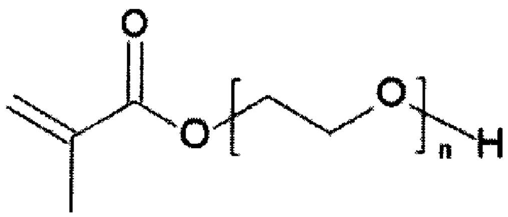

n=8 (5)

Blemmer 10PPB-500B: Polypropylene glycol polybutylene glycol monomethacrylate (manufactured by NOF Corporation)

Blemmer PP-1000: Polypropylene glycol monomethacrylate (manufactured by NOF Corporation, a compound represented by the following formula (6)) )

[Chem. 5]

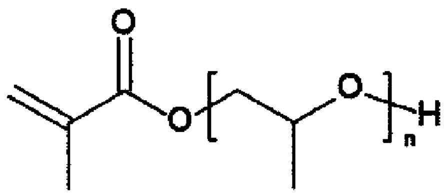

(6)

n=4~6

St: Styrene

Blemmer PME-400: Methoxypolyethyleneglycol monomethacrylate (manufactured by NOF Corporation, a compound represented by the following formula (7))

[Chem. 6]

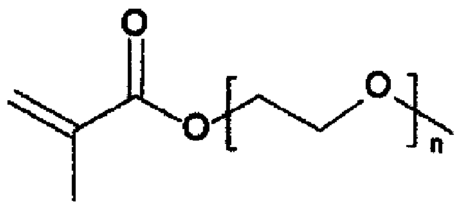

(7)

n=9

[Table 1]

<Table1 >

| | | Example 1 | Example 2 | Example 3 | Example 4 | Example 5 | Example 6 | Example 7 | Example 8 | Example 9 |
|---|---|---|---|---|---|---|---|---|---|---|
| Structural units derived from myrcene (% by mass) | Myrcene | 40 | 60 | 80 | 80 | 90 | 80 | 70 | 80 | 80 |
| Structural units derived from (meth)acryloyl group-containing compound (% by mass) | SLMA | 60 | 40 | - | - | - | - | - | - | - |
| | Blemmar PP-800 | - | - | - | 20 | - | 10 | - | - | - |
| | Blemmar AP-400 | - | - | - | - | 10 | - | - | - | - |
| | 2 TMSO-EMA | - | - | 20 | - | - | - | 20 | - | - |
| | KBM-503 | - | - | - | - | - | - | - | 20 | - |
| | AMA | - | - | - | - | - | 10 | 10 | - | - |
| | Viscoat 8FM | - | - | - | - | - | - | - | - | 20 |
| | 4HBA | - | - | - | - | - | - | - | - | - |
| | Blemmar GLM | - | - | - | - | - | - | - | - | - |
| | AA | - | - | - | - | - | - | - | - | - |
| | DEAA | - | - | - | - | - | - | - | - | - |
| | MAA | - | - | - | - | - | - | - | - | - |
| | P-1M | - | - | - | - | - | - | - | - | - |
| | Blemmar PE-350 | - | - | - | - | - | - | - | - | - |
| | Blemmar 10PP-B-500B | - | - | - | - | - | - | - | - | - |

(continued)

| | | Example 1 | Example 2 | Example 3 | Example 4 | Example 5 | Example 6 | Example 7 | Example 8 | Example 9 |
|---|---|---|---|---|---|---|---|---|---|---|
| | Blemmar PP-1000 | - | - | - | - | - | - | - | - | - |
| | Blemmar PME-400 | - | - | - | - | - | - | - | - | - |
| Other structural units (% by mass) | St | - | - | - | - | - | - | - | - | - |
| Weight average molecular weight | | 27000 | 31000 | 210000 | 14000 | 11000 | 14000 | 20000 | 21000 | 12000 |
| Number average molecular weight | | 14000 | 14000 | 10000 | 7000 | 6000 | 7000 | 9000 | 7000 | 6000 |
| Solution state | | ○ | ○ | ○ | ○ | ○ | ○ | ○ | ○ | ○ |
| Friction coefficient | | 0.179 | 0.162 | 0.138 | 0.138 | 0.136 | 0.134 | 0.124 | 0.143 | 0.130 |

[Table 2]

<Table2>

| | | Example 10 | Example 11 | Example 12 | Example 13 | Example 14 | Example 15 | Example 16 | Example 17 | Example 18 | Example 19 |
|---|---|---|---|---|---|---|---|---|---|---|---|
| Structural units derived | Myrcene | 96 | 95 | 98 | 96 | 98 | 80 | 89 | 80 | 80 | 80 |
| Structural units derived from (meth)acryloyl group-containing compound (% by mass) | SLMA | - | - | - | - | - | - | - | - | - | - |
| | Blemmar PP-800 | - | - | - | - | - | 18 | - | - | - | - |
| | Blemmar AP-400 | - | - | - | - | - | - | - | - | - | - |
| | 2 TMSO-EMA | - | - | - | - | - | - | - | - | - | - |
| | KBM-503 | - | - | - | - | - | - | - | - | - | - |
| | AMA | - | - | - | - | - | - | - | - | - | - |
| | Viscoat 8FM | - | - | - | - | - | - | - | - | - | - |
| | 4HBA | 4 | - | - | - | - | - | - | - | - | - |
| | Blemmar GLM | - | 5 | - | - | - | - | - | - | - | - |
| | AA | - | - | 2 | - | - | - | - | - | - | - |
| | DEAA | - | - | - | 4 | - | - | - | - | - | - |
| | MAA | - | - | - | - | 2 | - | - | - | - | - |
| | P-1M | - | - | - | - | - | 2 | - | - | - | - |
| | Blemmar PE-350 | - | - | - | - | - | - | 11 | - | - | - |
| | Blemmar 10PP-B-500B | - | - | - | - | - | - | - | 20 | - | - |

(continued)

| | | Example 10 | Example 11 | Example 12 | Example 13 | Example 14 | Example 15 | Example 16 | Example 17 | Example 18 | Example 19 |
|---|---|---|---|---|---|---|---|---|---|---|---|
| | Blemmar PP-1000 | - | - | - | - | - | - | - | - | 20 | - |
| | Blemmar PME-400 | | | - | - | - | - | - | - | - | 20 |
| Other structural units (% by mass) | St | - | - | - | - | - | - | - | - | - | - |
| Weight average molecular weight | | 11000 | 11000 | 10000 | 10000 | 11000 | 12000 | 25000 | 10000 | 22000 | 30000 |
| Number average molecular weight | | 6000 | 6000 | 6000 | 6000 | 6000 | 6000 | 9000 | 6000 | 9000 | 12000 |
| Solution state | | ○ | ○ | ○ | ○ | ○ | ○ | ○ | ○ | ○ | ○ |
| Friction coefficient | | 0.172 | 0. 163 | 0.164 | 0.168 | 0.182 | 0.142 | 0.145 | 0.148 | 0.143 | 0.136 |

[Table 3]

<Table3>

| | | Example 20 | Example 21 | Example 22 | Comparative Example 1 | Comparative Example 2 | Comparative Example 3 |
|---|---|---|---|---|---|---|---|
| Structural units derived | Myrcene | 33 | 20 | 90 | - | 13 | 20 |
| Structural units derived from (meth)acryloyl group-containing compound (% by mass) | SLMA | 67 | 80 | - | - | 87 | - |
| | Blemmar PP-800 | - | - | - | - | - | - |
| | Blemmar AP-400 | - | - | - | - | - | - |
| | 2 TMSO-EMA | - | - | - | - | - | - |
| | KBM-503 | - | - | - | - | - | - |
| | AMA | - | - | - | - | - | - |
| | Viscoat 8FM | - | - | 10 | - | - | - |
| | 4HBA | - | - | - | - | - | - |
| | Blemmar GLM | - | - | - | - | - | - |
| | AA | - | - | - | - | - | - |
| | DEAA | - | - | - | - | - | - |
| | MAA | - | - | - | - | - | - |
| | P-1M | - | - | - | - | - | - |
| | Blemmar PE-350 | - | - | - | - | - | - |
| | Blemmar 10PPB-500B | - | - | - | - | - | - |
| | Blemmar PP-1000 | - | - | - | - | - | - |
| | Blemmar PME-400 | - | - | - | - | - | - |
| Other structural units (% by mass) | St | - | - | - | - | - | 80 |
| Weight average molecular weight | | 25000 | 34000 | 10000 | - | 51000 | 37000 |

(continued)

| | Example 20 | Example 21 | Example 22 | Comparative Example 1 | Comparative Example 2 | Comparative Example 3 |
|---|---|---|---|---|---|---|
| Number average molecular weight | 13000 | 21000 | 5000 | - | 31000 | 20000 |
| Solution state | ○ | ○ | ○ | - | ○ | × |
| Friction coefficient | 0.176 | 0.194 | 0.132 | *1 | 0.196 | *2 |
| *1 Cannot be measured due to seizure<br>*2 Cannot be measured due to sediment in the oil | | | | | | |

As shown in Tables 1 to 3, Examples 1 to 22 using the polymer of the present invention containing myrcene units and (meth)acryloyl group-containing compound units all showed good solubility in base oil. In addition, Examples 1 to 22 all showed excellent friction reduction ability compared to Comparative Example 1 not using the polymer and Comparative Example 2 with a low myrcene unit content. Comparative Example 3 not containing (meth)acryloyl group-containing compound units had low solubility in base oil, could not maintain a solution state, and friction reduction ability could not be measured.

Although the present invention has been described in detail using specific embodiments, it is clear to those skilled in the art that various changes can be made within the scope of achieving the effects of the invention.

The present application is based on Japanese Patent Application No. 2022-137528 filed on August 31, 2022, Japanese Patent Application No. 2022-137529 filed on August 31, 2022, Japanese Patent Application No. 2022-204508 filed on December 21, 2022, and Japanese Patent Application No. 2023-032938 filed on March 3, 2023, the entire contents of which are incorporated herein by reference.

Industrial Applicability

The lubricating oil additive of the present invention has excellent solubility in oil and friction reduction ability, and can be suitably used in various lubricating oils such as drive system lubricating oils, automatic transmission oils, hydraulic oils, engine oils, and the like.

## Claims

1. A polymer comprising: a structural unit derived from a compound represented by the following formula (1); and, a structural unit derived from a (meth)acryloyl group-containing compound,
   wherein the polymer has a content of the structural unit derived from the compound represented by the following formula (1) of 15% by mass or more based on 100% by mass of a total of all structural units, and the polymer has a weight average molecular weight of 5,000 to 500,000.

   [Chem. 1]

   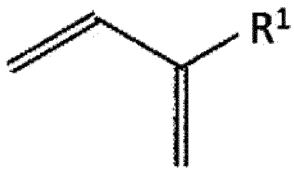

   (1)

   (In the formula (1), $R^1$ is a group represented by $C_nH_{2n+m}$. n is an integer of 1 to 30. m is either -3, -1, or 1. 2n+m is an integer of 3 or more.)

2. The polymer according to claim 1, wherein in the formula (1), n is an integer of 1 to 11, m is either -3 or -1, and 2n+m is an integer of 3 to 19.

3. The polymer according to claim 2, wherein in the formula (1), n is an integer of 6 to 11, and m is -1.

4. The polymer according to claim 3, wherein in the formula (1), $R^1$ is a group represented by $C_6H_{11}$.

5. A polymer comprising: a structural unit derived from myrcene; and, a structural unit derived from a (meth)acryloyl group-containing compound,
wherein the polymer has a content of the structural unit derived from myrcene of 15% by mass or more based on 100% by mass of a total of all structural units, and the polymer has a weight average molecular weight of 5,000 to 500,000.

6. The polymer according to claim 5, wherein the content of the structural unit derived from myrcene is 31% by mass or more based on 100% by mass of the total of all structural units.

7. The polymer according to claim 1 or 5, wherein the (meth)acryloyl group-containing compound has a carbon number of 3 to 65.

8. The polymer according to claim 1 or **5,** wherein the (meth)acryloyl group-containing compound has at least one functional group selected from the group consisting of an alkyl group, a hydroxyl group, a silyloxy group, a vinyl group, an ether group, an amino group, a carboxylic acid group, a fluorine atom, and a phosphate group.

9. The polymer according to claim 1 or **5,** wherein the (meth)acryloyl group-containing compound is a (meth)acrylic acid alkyl ester.

10. The polymer according to claim 1 or 5, wherein the content of the structural units derived from a (meth)acryloyl group-containing compound is 0.1% by mass or more and less than 85% by mass based on 100% by mass of all structural units.

11. The polymer according to claim 1 or 5, being soluble in a solvent.

12. A lubricating oil additive comprising the polymer according to claim 1 or 5 and a solvent.

13. The lubricating oil additive according to claim 12, wherein the solvent contains a mineral oil or a synthetic chemical oil.

14. The lubricating oil additive according to claim 12, wherein the solvent contains 10% by mass or more of paraffin oil in 100% by mass of the solvent.

15. The lubricating oil additive according to claim 12, wherein the lubricating oil additive has an average value of a friction coefficient measured in the following friction coefficient measurement test of 0.190 or less.
<Friction coefficient measurement test>
The lubricating oil additive is applied on a surface of a φ24×7.9 mm SUJ-2 disk. The friction coefficient of the surface is measured using a vibration friction and wear tester (SRV tester) with a φ10 mm SUJ-2 ball under conditions of a test temperature of 40°C, amplitude of 1 mm, and frequency of 50 Hz, with a load of 50 N for 30 seconds from the start of the test, and then changed to 200 N after the 30 seconds. The average value of the friction coefficients measured during the test time of 50 to 60 minutes is calculated.

16. A lubricating oil containing the lubricating oil additive according to claim 12.

17. A friction modifier comprising: a polymer and a mineral oil or a synthetic chemical oil,

wherein the polymer comprising: a structural unit derived from a compound represented by the following formula (1); and, a structural unit derived from a (meth)acryloyl group-containing compound,
and the polymer has a content of the structural unit derived from the compound represented by the following formula (1) of 15% by mass or more based on 100% by mass of a total of all structural units.

[Chem. 2]

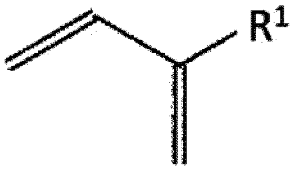

(1)

(In the formula (1), $R^1$ is a group represented by $C_nH_{2n+m}$. n is an integer of 1 to 30. m is either -3, -1, or 1. 2n+m is an integer of 3 or more.)

**18.** The friction modifier according to claim 17, wherein the (meth)acryloyl group-containing compound has a carbon number of 3 to 65.

**19.** The friction modifier according to claim 17, wherein the content of the structural units derived from the (meth)acryloyl group-containing compound is 0.1% by mass or more and less than 85% by mass based on 100% by mass of a total of all structural units of the polymer.

**20.** A lubricating oil containing the friction modifier according to claim 17.

**21.** A method for producing a lubricating oil additive, the method comprising producing a polymer in a solvent,

the polymer comprising: a structural unit derived from a compound represented by the following formula (1); and, a structural unit derived from a (meth)acryloyl group-containing compound,
wherein the polymer has a content of the structural unit derived from the compound represented by the following formula (1) of 15% by mass or more based on 100% by mass of a total of all structural units, and the polymer has a weight average molecular weight of 5,000 to 500,000.

[Chem. 3]

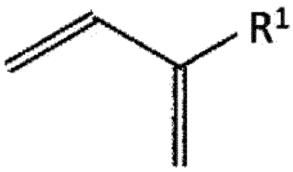

(1)

(In the formula (1), $R^1$ is a group represented by $C_nH_{2n+m}$. n is an integer of 1 to 30. m is either -3, -1, or 1. 2n+m is an integer of 3 or more.)

**22.** A method for producing a lubricating oil additive, the method comprising producing a polymer in a solvent,

the polymer comprising: a structural unit derived from myrcene; and, a structural unit derived from a (meth) acryloyl group-containing compound,
wherein the polymer has a content of the structural unit derived from myrcene of 15% by mass or more based on 100% by mass of a total of all structural units, and the polymer has a weight average molecular weight of 5,000 to 500,000.

**23.** The method for producing a lubricating oil additive according to claim 21 or 22, wherein the carbon number of the (meth)acryloyl group-containing compound is 3 to 65.

**24.** The method for producing a lubricating oil additive according to claim 21 or 22, wherein the solvent contains a mineral oil or a synthetic chemical oil.

**25.** The method for producing a lubricating oil additive according to claim 21 or 22, wherein the lubricating oil additive has

an average value of a friction coefficient measured in the following friction coefficient measurement test of 0.190 or less.

<Friction coefficient measurement test>

The lubricating oil additive is applied on a surface of a φ24×7.9 mm SUJ-2 disk. The friction coefficient of the surface is measured using a vibration friction and wear tester (SRV tester) with a φ10 mm SUJ-2 ball under conditions of a test temperature of 40°C, amplitude of 1 mm, and frequency of 50 Hz, with a load of 50 N for 30 seconds from the start of the test, and then changed to 200 N after the 30 seconds. The average value of the friction coefficients measured during the test time of 50 to 60 minutes is calculated.

## INTERNATIONAL SEARCH REPORT

International application No. **PCT/JP2023/017736**

**A. CLASSIFICATION OF SUBJECT MATTER**

***C08F 220/10***(2006.01)i; ***C08F 236/08***(2006.01)i; ***C08F 236/22***(2006.01)i; ***C10M 143/12***(2006.01)i; ***C10M 145/14***(2006.01)i; ***C10M 147/00***(2006.01)i; ***C10M 149/04***(2006.01)i; ***C10M 153/02***(2006.01)i; *C10N 20/04*(2006.01)n; *C10N 30/00*(2006.01)n; *C10N 30/06*(2006.01)n; *C10N 40/04*(2006.01)n; *C10N 40/08*(2006.01)n; *C10N 40/25*(2006.01)n

FI: C08F220/10; C10M153/02; C10M143/12; C10M147/00; C10M145/14 ZAB; C08F236/08; C08F236/22; C10M149/04; C10N40:08; C10N30:06; C10N20:04; C10N30:00 A; C10N40:04; C10N40:25

According to International Patent Classification (IPC) or to both national classification and IPC

**B. FIELDS SEARCHED**

Minimum documentation searched (classification system followed by classification symbols)

C08F220/00-220/70; C08F236/08; C08F236/22; C10M143/12; C10M145/14; C10M147/00; C10M149/04; C10M153/02; C10N20/04; C10N30/00; C10N30/06; C10N40/04; C10N40/08; C10N40/25

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 107903349 A (DALIAN UNIVERSITY OF TECHNOLOGY) 13 April 2018 (2018-04-13) claims, examples 10, 12 | 1-11 |
| A | | 12-25 |
| X | JP 2015-511266 A (AMYRIS, INC.) 16 April 2015 (2015-04-16) claims, paragraphs [0242]-[0324] | 1-2, 7-11 |
| A | | 3-6, 12-25 |
| X | CN 109897134 A (BEIJING ETERNAL MATERIAL TECHNOLOGY CO., LTD.) 18 June 2019 (2019-06-18) claims, synthesis examples 4, 5 | 1-8, 10-11 |
| A | | 9, 12-25 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 July 2023** | **01 August 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/017736

C. DOCUMENTS CONSIDERED TO BE RELEVANT

| Category* | Citation of document, with indication, where appropriate, of the relevant passages | Relevant to claim No. |
|---|---|---|
| X<br>A | JP 2017-110070 A (TOYO TIRE & RUBBER CO.) 22 June 2017 (2017-06-22)<br>claims, paragraphs [0059]-[0090] | 1-11<br>12-25 |
| A | JP 2019-532142 A (FINA TECHNOLOGY, INC.) 07 November 2019 (2019-11-07) | 1-25 |
| A | JP 2004-352946 A (SANYO CHEM. IND. LTD.) 16 December 2004 (2004-12-16) | 1-25 |
| A | JP 2010-532805 A (EVONIK ROHMAX ADDITIVES GMBH) 14 October 2010 (2010-10-14) | 1-25 |
| A | WO 2014/142001 A1 (KURARAY CO., LTD.) 18 September 2014 (2014-09-18) | 1-25 |

Form PCT/ISA/210 (second sheet) (January 2015)

**INTERNATIONAL SEARCH REPORT**
**Information on patent family members**

International application No.
**PCT/JP2023/017736**

| Patent document cited in search report | Publication date (day/month/year) | Patent family member(s) | Publication date (day/month/year) |
|---|---|---|---|
| CN 107903349 A | 13 April 2018 | (Family: none) | |
| JP 2015-511266 A | 16 April 2015 | US 2015/0025193 A1<br>claims, paragraphs [0247]-[0329]<br>WO 2013/126129 A1<br>AU 2012370447 A<br>CA 2864663 A1<br>CN 104203989 A<br>MX 2014010058 A<br>KR 10-2014-0130183 A<br>HK 1202884 A<br>ZA 201405513 B<br>SG 11201404518P A | |
| CN 109897134 A | 18 June 2019 | (Family: none) | |
| JP 2017-110070 A | 22 June 2017 | US 2018/0346694 A1<br>claims, paragraphs [0164]-[0297]<br>WO 2017/104135 A1<br>CN 108473721 A | |
| JP 2019-532142 A | 07 November 2019 | US 2018/0072826 A1<br>US 2020/0123285 A1<br>WO 2018/052709 A1<br>TW 201829495 A<br>CA 3034530 A1<br>KR 10-2019-0043177 A<br>CN 109790256 A<br>BR 112019003085 A<br>MX 2019002312 A | |
| JP 2004-352946 A | 16 December 2004 | (Family: none) | |
| JP 2010-532805 A | 14 October 2010 | US 2010/0190671 A1<br>WO 2009/007147 A1<br>DE 102007032120 A1<br>DE 102007046223 A1<br>CA 2693461 A1<br>CN 101687963 A<br>KR 10-2010-0032417 A<br>MX 2009013917 A<br>RU 2010104028 A | |
| WO 2014/142001 A1 | 18 September 2014 | US 2015/0284656 A1<br>EP 2899255 A1<br>CA 2888668 A1<br>CN 104704090 A<br>KR 10-2015-0048902 A<br>TW 201443209 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014142001 A
- JP 2017197728 A
- JP 2022137528 A
- JP 2022137529 A
- JP 2022204508 A
- JP 2023032938 A